# FASCICULE DE BREVET EUROPEEN

(11) **EP 0 886 158 B1**
(45) Date de publication et mention de la délivrance du brevet: **02.11.2006**
(21) Numéro de dépôt: 98401410.0
(22) Date de dépôt: 11.06.1998
(51) Int. Cl.: G02B 6/44

(54) **Répartiteur à haute densité et grande capacité, notamment pour fibres optiques**
Verteiler mit hoher Dichte und Aufnahmefähigkeit, insbesondere für optische Fasern
Distribution frame with high density and high capacity, in particular for optical fibres

(30) Priorité: 20.06.1997 FR 9707892
(43) Date de publication de la demande: 23.12.1998
(73) Titulaire: Fahrenheit Thermoscope LLC, Las Vegas, NV 89119 (US)
(72) Inventeur: Laniepce, Sylvie, 14350 La Graverie (FR); Blanchard, Anne-marie, 22560 Pleumeur Bodou (FR); Gueguen, Jean-Jacques, 22700 St. Quay-Perros (FR)
(74) Mandataire: Cabinet Martinet & Lapoux

(56) Documents cités:
- WO-A-90/00261
- DE-A- 4 322 142
- US-A- 5 212 761
- US-A- 5 402 515

## Description

La présente invention concerne un répartiteur à haute densité et grande capacité, notamment pour fibres optiques, utilisable comme répartiteur optique de fibres optiques d'usagers, ou bien comme sous-répartiteur.

Un répartiteur optique est un dispositif qui assure essentiellement une continuité optique révisable et totalement flexible entre des extrémités de premières fibres optiques, par exemple des fibres optiques provenant de câbles de réseaux souterrains, et des extrémités de deuxièmes fibres optiques, par exemple provenant d'équipements d'usager d'un central téléphonique. Le répartiteur permet ainsi de modifier fibre à fibre et sans limitation de combinaisons, des affectations entre premières fibres et deuxièmes fibres définies lors du câblage initial (fonction de brassage) et de supprimer ces affectations momentanément ou définitivement (fonction d'attente). Dans le cadre du développement des fibres optiques dans les réseaux de distribution, il est nécessaire de concevoir des répartiteurs optiques de grande capacité, et d'atteindre des densités en optique comparables à celles existantes dans les répartiteurs traditionnels de lignes téléphoniques en cuivre.

Dans un répartiteur optique à architecture matricielle, des modules de raccordement, dits également connecteurs, sont répartis suivant une matrice plane. Les extrémités des premières fibres optiques sont introduites dans l'une des faces du répartiteur d'une manière fixe. Les extrémités des deuxièmes fibres optiques peuvent être déplacées sur l'autre face du répartiteur matriciel lors d'opérations de brassage (demandes de brevet japonais de NTT JP-A-07-318820, JP-A-07-244225, JP-A-07-333530 et JP-A-07-333531).

Il existe deux variantes de répartiteurs matriciels, une variante à un étage, et une variante à deux étages.

Dans la variante à un étage, une face de la matrice est alimentée par les premières fibres, qui sont par exemple des fibres de réseau, et l'autre face de la matrice est alimentée par les deuxièmes fibres, qui sont par exemple des fibres d'équipements d'usager. Lors des opérations de brassage, les extrémités soit des fibres de réseau, soit des fibres d'équipement sont mobiles, c'est-à-dire peuvent être extraites des modules de raccordement et introduites dans ceux-ci.

Dans la variante à deux étages, deux matrices composent les étages. L'une des faces de chaque matrice reçoit les fibres de réseau ou les fibres d'équipement d'usager. La continuité optique entre les fibres de réseau et les fibres d'équipement est assurée par une fibre rapportée dite fibre de liaison s'étendant entre les deux matrices. Les fibres de liaison sont déplacées lors des opérations de brassage.

La matrice de connexion peut être associée à un panneau d'organisation, ou une barrette d'alignement, qui organise de manière spatiale mais non modifiable dans le temps, quelles que soient les opérations de brassage ultérieures, des fibres optiques arrivant sur la face de la matrice. Le panneau comporte une matrice de trous traversés respectivement par les fibres optiques. Les déplacements de fibres optiques liées aux opérations de brassage et les croisements de celles-ci qui y sont associées ont lieu entre le panneau d'organisation et la matrice de module de raccordement.

Une opération de brassage s'effectue essentiellement en trois opérations élémentaires successives :
- déconnexion d'une extrémité de fibre optique dans un module de raccordement au niveau de la face de la matrice ;
- extraction de la fibre optique depuis le panneau d'organisation en la tirant à travers le flot de fibres entrecroisées s'étendant entre la matrice de modules de raccordement et le panneau d'organisation, ce dernier ayant pour fonction de permettre le repérage de la fibre optique à extraire ; et
- tirage de la fibre optique extraite depuis le panneau d'organisation vers le module de raccordement à connecter, en passant par dessus le flot existant des fibres optiques entrecroisées.

Dans ces répartiteurs connus, l'organisation matricielle des modules de raccordement rend difficile l'accès à ceux-ci, puisque pour atteindre un module de raccordement, il est nécessaire de faufiler la main ou un outil à travers le rideau des extrémités de fibre aboutissant à la matrice. Cette opération est d'autant plus délicate que la densité de modules de raccordement est élevée. Cette opération "d'infiltration" à travers le rideau d'extrémités de fibre est également nécessaire pour la maintenance des modules de raccordement.

En outre, la présence du panneau d'organisation nécessite de tirer une fibre optique à déconnecter ou déconnecter/connecter à travers tout le flot de fibres optiques s'étendant entre la matrice et le panneau d'organisation, et le cas échéant de tirer ensuite une autre fibre optique depuis et à travers le panneau d'organisation, puis à travers toutes les autres fibres optiques environnantes entre le panneau et la matrice. Les fibres n'étant ni changées ni ajustées en longueur pendant les brassages, ces fibres doivent être suffisamment longues pour raccorder indifféremment des extrémités de fibres respectivement à des modules de raccordement proches ou bien très éloignés dans la matrice.

En outre, pour un répartiteur à faible densité, les fibres optiques de liaison ont des longueurs souvent bien trop importantes et trop disparates, ce qui ne permet pas une interchangeabilité entre fibres optiques de liaison lors d'opérations de brassage. Cette disparité est d'autant plus prononcée que les modules de raccordement sont relativement espacés les uns des autres, c'est-à-dire leur densité est relativement faible, et les matrices ont des dimensions de plus en plus grandes pour augmenter leur capacité.

Un répartiteur de fibres optiques tel que défini dans le préambule de la revendication 1 est divulgué dans le brevet US 5 402 515. Ce répartiteur de fibres optiques comprend des plateaux disposés parallèlement les uns aux autres et chacun articulé à un coin d'une cassette d'un module de connexion par un système de pivotement composé d'une vis traversant des crochets mobiles. Chaque plateau comporte des connecteurs parallèles les uns aux autres pour connecter des fibres optiques entrant à des fibres de liaison.

Cependant les plateaux supportent des aires de lovage de fibres optiques ainsi que des adaptateurs de connecteurs qui sont positionnés sur la surface des plateaux et enclipsables dans des trous des plateaux. Les plateaux sont ainsi volumineux.

L'invention a pour objectif de fournir un répartiteur de fibres optiques dans lequel les extrémités des fibres optiques à brasser sont plus aisément accessibles que dans les répartiteurs matriciels connus et les supports des modules de raccordement sont moins volumineux tout en conservant leur rigidité.

A cette fin, un répartiteur de fibres optiques comprenant des modules de raccordement répartis suivant une matrice pour connecter des extrémités de premières fibres optiques à des extrémités de deuxièmes fibres optiques, et des supports supportant respectivement des rangées de modules de raccordement s'étendant parallèlement à deux côtés parallèles de la matrice et ayant des premières extrémités montées à rotation autour d'un axe de rotation parallèle aux deux autres côtés de la matrice, est caractérisé en ce qu'il comprend des guides parallèles en arcs de cercle centrés sur l'axe de rotation pour guider des deuxièmes extrémités des supports sous forme de barrettes entre deux butées.

Le répartiteur de l'invention se présente ainsi sous la forme d'une matrice formée par les rangées de module de raccordement, constituant en pratique des colonnes de la matrice, qui sont indépendantes les unes des autres, autour de l'axe de rotation. Un support de module de raccordement contenant un module de raccordement pour extrémités de fibres optiques à brasser, peut être extrait du plan de la matrice par simple rotation autour de l'axe de rotation d'une position de repos vers une position de travail, sans perturber les fibres optiques qui sont raccordées au module de raccordement supporté par le support, et sans être gênées par les autres fibres optiques aboutissant à la matrice.

Chaque support comprend au moins une rangée voire deux rangées de modules de raccordement, ce qui permet un accès latéral aisé aux points de connexion où les fibres optiques sont connectées deux à deux. Cette facilité d'accès est liée au montage à rotation des supports de module de raccordement, compatible avec une organisation à haute densité de connectique miniature, ce qui permet d'atteindre des pas d'assemblage de quelques millimètres entre points de connexion.

De manière à conserver la rigidité aux supports des modules de raccordement, les guides parallèles en arcs de cercle centrés sur l'axe de rotation guident des deuxièmes extrémités des supports de modules de raccordement coulissant entre deux butées, de préférence des traverses perpendiculaires aux guides. En variante, les guides peuvent être linéaires. De préférence, l'une des deux butées et l'axe de rotation sont situés sensiblement dans un côté du répartiteur correspondant à la position de travail qui est par exemple vertical. Tous les supports sont ainsi en retrait du plan vertical, à l'exception du support qui est sorti de la matrice par rotation autour de l'axe de rotation et qui est disposé dans le plan vertical pour y procéder à une opération de connexion/déconnexion d'extrémités de fibres optiques ou de maintenance sur un module de raccordement dudit support, sans perturber les autres fibres optiques avoisinantes.

De manière à encore éviter tout emmêlement entre fibres optiques associées à des supports voisins et également tout emmêlement de fibres optiques devant la matrice de modules de raccordement, des cloisons sont fixées à la structure du répartiteur, ou selon une autre réalisation sont solidaires respectivement des supports de modules de raccordement. Les cloisons sont prévues entre des secteurs circulaires balayés par les supports de modules de raccordement lorsqu'ils tournent autour de l'axe de rotation.

Le répartiteur comprend un rouleau s'étendant parallèlement à l'axe de rotation et à proximité de celui-ci. Ce rouleau est principalement utile lorsque les fibres optiques à brasser retombent dessous le répartiteur, particulièrement lorsque ces fibres optiques sont des fibres de liaison dans un répartiteur à deux étages. Le rouleau évite une flexion excessive des fibres optiques sous le poids des fibres optiques supérieures, de manière à leur conserver un rayon de courbure supérieur au rayon de courbure minimal admissible.

Chaque module de raccordement est monté de préférence de manière amovible. Dans ce cas, chaque support de module de raccordement comprend des logements alignés perpendiculairement à l'axe de rotation et conformés pour y fixer de manière amovible des modules de raccordement respectivement. Les modules de raccordement peuvent être des petits modules de raccordement individuels pour raccorder deux extrémités de fibres optiques. Selon une autre variante, chaque module de raccordement est un module de raccordement collectif pour raccorder deux à deux des extrémités de premières fibres optiques à des extrémités de deuxièmes fibres optiques, par exemple quatre, huit ou douze paires de fibres optiques. Un tel support de modules de raccordement est compatible avec tout type de connectique, individuel, c'est-à-dire fibre par fibre, et collectif, c'est-à-dire par groupes de fibres tels que câbles, mais également semi-collectif, c'est-à-dire collectif relativement à une face de la matrice et individuel relativement à l'autre face de la matrice.

L'invention concerne également un répartiteur de grande capacité à deux étages. Un tel répartiteur de fibres optiques comprend un premier répartiteur incluant des modules de raccordement répartis suivant une matrice pour connecter des extrémités de premières fibres optiques à des premières extrémités de fibres optiques de liaison, et un deuxième répartiteur incluant des modules de raccordement répartis suivant une matrice pour connecter des extrémités de deuxièmes fibres optiques à des deuxièmes extrémités des fibres optiques de liaison, chacun des premier et deuxième répartiteurs comprenant des supports de modules de raccordement supportant respectivement des rangées de modules de raccordement s'étendant parallèlement à des côtés de la matrice respective et ayant des premières extrémités montées à rotation autour d'un axe de rotation parallèle aux deux autres côtés de la matrice respective. Le répartiteur de fibres optiques est caractérisé en ce que chacun des premier et deuxième répartiteurs comprend des guides parallèles en arcs de cercle centrés sur l'axe de rotation pour guider des deuxièmes extrémités des supports sous forme de barrettes entre deux butées.

Lorsque les premier et deuxième répartiteurs sont éloignés l'un de l'autre sensiblement suivant dans un plan horizontal, une bande est suspendue entre les premier et deuxième répartiteurs et située sensiblement en-dessous des axes de rotation, pour porter les fibres de liaison.

En outre, le répartiteur peut comprendre un plateau de travail, de préférence amovible ou articulé le long de l'un de ses côtés, s'étendant au-dessus de la bande porteuse des fibres de liaison.

Le répartiteur de grande capacité est conçu en une structure de poutrelles, montants et traverses, délimitant sensiblement deux blocs parallélépipèdiques contenant les premier et deuxième répartiteurs respectivement, et un troisième bloc parallélépipédique central reposant sur le sol, dans lequel les fibres optiques de liaison sont étendues, et situé entre lesdits deux blocs parallélépipèdiques.

Le répartiteur est enfermé dans un carénage ayant au moins une porte donnant accès directement sur un espace intermédiaire entre les premier et deuxième répartiteurs et contenant les fibres optiques de liaison.

Chacun des premier et deuxième répartiteurs peut comprendre une butée qui délimite une extrémité de course des supports et qui est sensiblement coplanaire à l'axe de rotation dans un côté du répartiteur qui peut être vertical, incliné ou horizontal en dépendance des possibilités d'accessibilité au répartiteur déterminées lors de son installation. Les plans de travail correspondent aux positions de travail dans les premier et deuxième répartiteurs sont par exemple directement en regard l'un de l'autre.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective schématique d'un répartiteur à premier et deuxième répartiteurs élémentaires conforme à l'invention, vu par la face avant ;
- la figure 2 est une vue en perspective de face avant du premier répartiteur élémentaire pour fibres optiques de réseau, vu par la face avant selon une première réalisation de l'invention ;
- la figure 3 est une vue en perspective de face arrière du premier répartiteur vu par la face arrière ;
- la figure 4 est une vue de détail en perspective analogue à la figure 2, montrant des supports de modules en position de travail à l'intérieur du premier répartiteur ;
- la figure 5 est une vue schématique montrant une liaison entre un câble de premières fibres optiques, côté réseau, et un câble de deuxièmes fibres optiques, côté équipements d'usager, à travers des modules de raccordement respectivement dans les premier et deuxième répartiteurs élémentaires et des fibres optiques de liaison ;
- la figure 6 montre une fibre de liaison avec des fiches de connexion enclipsables ;
- la figure 7 est une vue analogue à la figure 2, du premier répartiteur selon une deuxième réalisation de l'invention muni de cloisons de guidage de fibres entre secteurs circulaires où pivotent les supports de modules de raccordement ;
- la figure 8 est une vue en perspective analogue à la figure 3 du premier répartiteur muni de cloisons selon la deuxième réalisation ;
- la figure 9 est une vue en perspective du carénage du répartiteur global avec portes d'accès ouvertes ; et
- la figure 10 est une vue en perspective schématique des positions de repos et de travail des supports de modules de raccordement dans les deuxième et premier répartiteurs selon une autre réalisation.

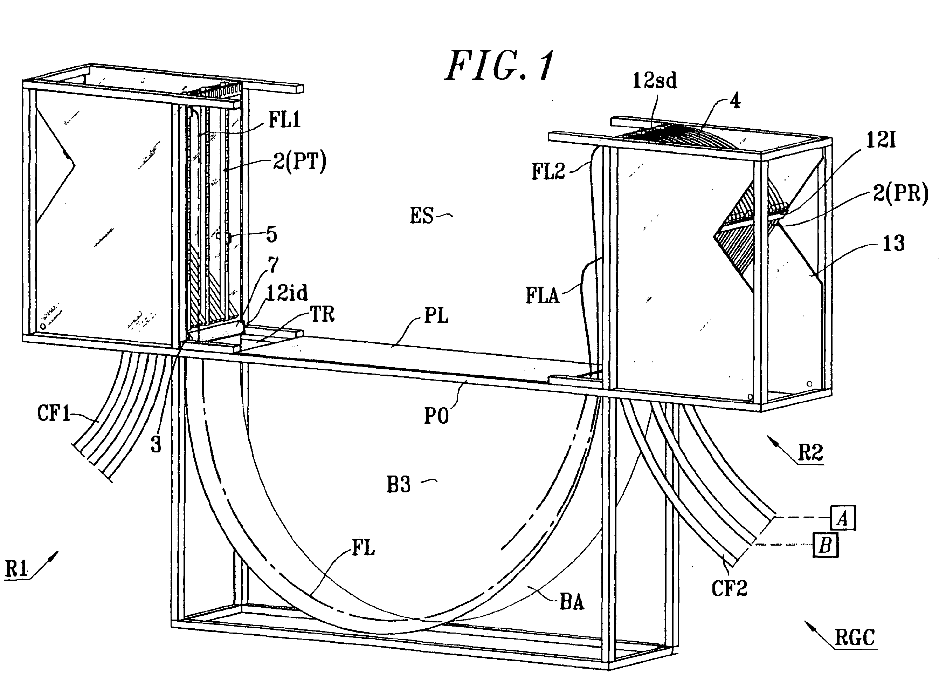

En référence à la figure 1, un répartiteur de grande capacité RGC est formé d'une structure métallique de poutrelles, montants et traverses qui délimitent essentiellement des premier, deuxième et troisième blocs parallélépipèdiques. Les premier et deuxième blocs parallélépipèdiques de la structure constituent des répartiteurs matriciels élémentaires R1 et R2 à un étage selon l'invention situés à gauche et à droite de la structure et en partie supérieure de celle-ci.

Le troisième bloc parallélépipédique B3 de la structure est situé en partie centrale de celle-ci à un niveau inférieur aux premier et deuxième répartiteurs R1 et R2 et entre ceux-ci. Il sert d'assise sur le sol au répartiteur de grande capacité. Dans le bloc parallélépipédique B3 sont développées des fibres optiques de liaison FL. Des premières extrémités FL1 des fibres optiques de liaison sont à raccorder à travers le premier répartiteur R1 à des extrémités de premières fibres optiques de câbles CF1, telles que des fibres optiques incluses dans des câbles d'un réseau souterrain à fibres optiques. Des deuxièmes extrémités FL2 des fibres optiques de liaison sont à raccorder à travers le deuxième répartiteur R2 à des extrémités de deuxièmes fibres optiques de câbles CF2, telles que des fibres optiques desservant individuellement des équipements d'usager. La structure du répartiteur de grande capacité RGC présente ainsi un plan de symétrie qui, selon l'exemple de réalisation illustré, est vertical et confondu avec le plan médian transversal du bloc parallélépipédique B3 et de l'espace parallélépipédique ES situé entre les premier et deuxième répartiteurs élémentaires. En conséquence de la symétrie, le premier répartiteur élémentaire R1 est identique au deuxième répartiteur élémentaire R2 et sera seulement décrit en détail ci-après.

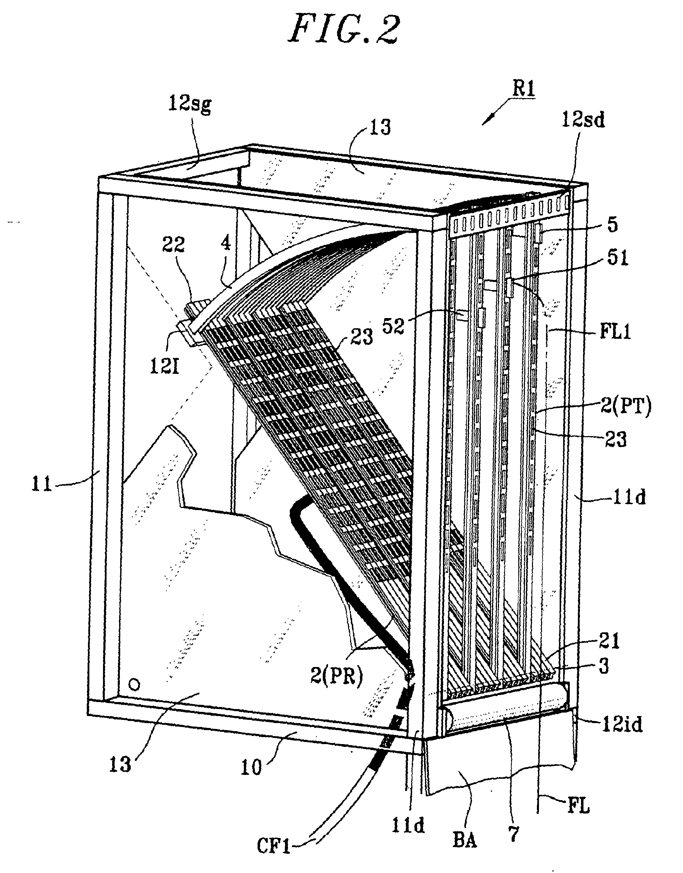

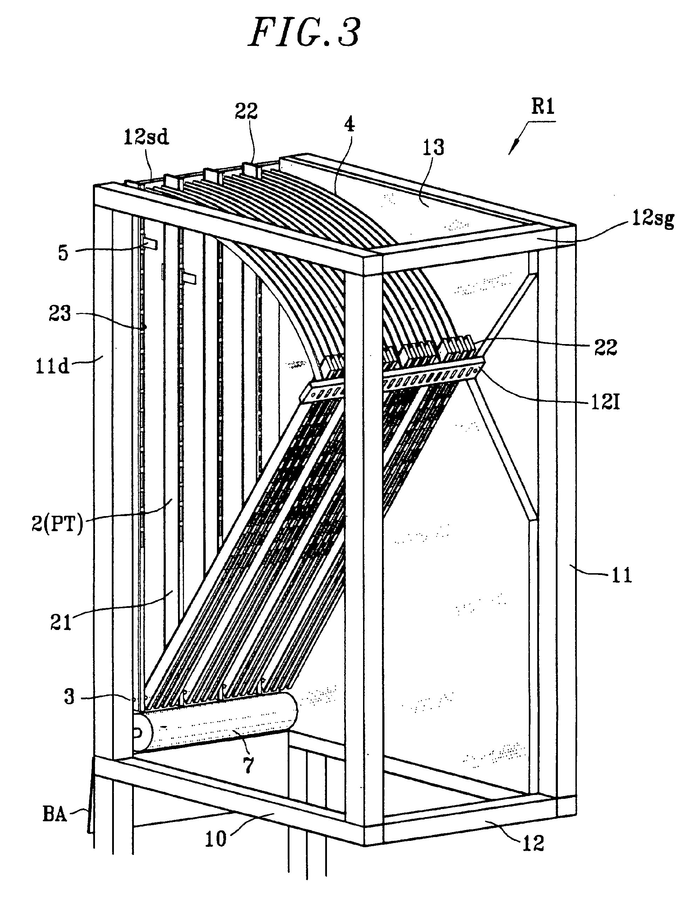

En référence aux figures 2, 3 et 4, le répartiteur matriciel élémentaire R1 présente une structure parallélépipédique comprenant classiquement quatre poutrelles 10, quatre montants 11 et quatre traverses 12, ainsi que deux plaques de soutien 13 disposées sur des faces qui sont verticales selon l'exemple de réalisation illustré de la structure.

Entre les deux plaques de soutien 13 sont disposés plusieurs supports de modules de raccordement 2 sous la forme de barrettes profilées parallèles ayant une longueur sensiblement inférieure à celle des montants 11 du répartiteur. Les extrémités inférieures 21 des supports 2 sont articulées autour d'un axe de rotation fixe 3 qui est introduit transversalement à force entre les plaques de soutien 13 au niveau inférieur des deux montants 11d du côté droit du répartiteur et au-dessus de la traverse inférieure droite 12id de la structure du répartiteur limitrophe à l'espace intermédiaire central ES. Des deuxièmes extrémités 22 des supports 2 sont respectivement traversées à glissement par des rails parallèles 4 en arcs de cercle centrés sur l'axe de rotation. Des premières extrémités 41 des rails 4 sont fixées à la traverse supérieure 12sd sur le côté droit du répartiteur. Des deuxièmes extrémités 42 des rails 4 sont fixées à une traverse intermédiaire 12I située entre les plaques de soutien, quelque peu au-dessous de la traverse supérieure gauche 12sg du répartiteur.

De cette manière, chaque support 2 balaye un secteur circulaire, typiquement de 45° environ, entre une position de travail verticale PT et une position de repos inclinée PR. A la position de travail PT, la deuxième extrémité 22 du support bute contre la traverse supérieure droite 12sd. A la position de repos PR, la deuxième extrémité 22 du support bute contre la traverse intermédiaire 12I. Par exemple, dans les figures 2, 3 et 4, quatre supports seulement sont en position de travail et ainsi situés dans le côté du répartiteur R1 jouxtant l'espace ES entre les répartiteurs R1 et R2.

Dans chaque support 2 sont pratiqués des trous 23 alignés perpendiculairement à l'axe de rotation 3 et équirépartis longitudinalement depuis la deuxième extrémité 22 du support jusqu'à une zone inférieure sans trou au-dessus de la première extrémité 21 du support. Chaque trou 23 est un logement conformé à un module de raccordement plat 5 qui peut être en forme de té selon la réalisation illustrée ou bien rectangulaire.

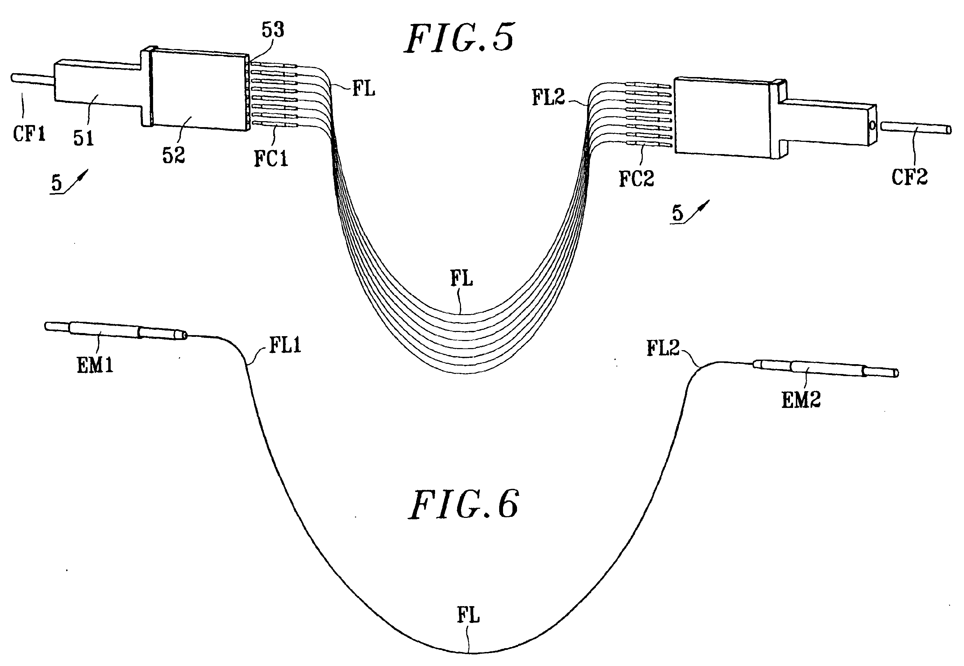

Selon la réalisation illustrée aux figures 5 et 6, la jambe 51 du té du module 5 est en forme de barreau rectangulaire plat qui s'étend vers la gauche pour recevoir une extrémité d'un câble de premières fibres optiques CF1 du type à microgaine flexible, ou selon une autre variante, un câble en ruban de premières fibres optiques. Par exemple, chaque câble comprend quatre, huit, ou douze fibres optiques. Les deux ailes 52 du profilé en té du module de raccordement 5 constituent un parallélépipède mince qui est emboîté dans une embase de la jambe 51. Le côté droit des ailes 52 comprend des trous longitudinaux 53 pour recevoir par enclipsage des fiches de connexion FC1 aux premières extrémités FL1 de fibres optiques de liaison FL. Typiquement, les trous 53 sont espacés d'un pas de quelques millimètres. En variante, chaque module de raccordement ne peut que raccorder qu'une première fibre optique à une fibre optique de liaison. Le nombre de fibres optiques de liaison raccordables dans un module de raccordement est toujours égal au nombre de premières fibres optiques contenu dans le câble CF1 pénétrant par le côté gauche du module de raccordement. Comme on le verra ci-après, des fiches de connexion FC2 aux deuxièmes extrémités FL2 des fibres de liaison sont également enclipsées dans d'autres modules de raccordement 5 enfichables dans le deuxième répartiteur R2, de manière à les raccorder à des câbles des deuxièmes fibres optiques CF2 desservant des équipements d'usager, et ainsi relier les premières fibres optiques provenant du réseau souterrain à des deuxièmes fibres optiques desservant des équipements d'usager respectivement.

En revenant à la réalisation illustrée aux figures 2 à 4, donnée à titre d'exemple, les parties gauches des ailes 52 des modules de raccordement 5 sont enfichées dans les trous de support 23 rectangulaires. Lorsque tous les supports 2 sont disposés en butée contre la traverse supérieure droite 12sd et ainsi forment un côté droit du répartiteur R1, ou lorsque tous les supports 2 sont disposés en butée contre la traverse intermédiaire 12I vers la gauche, l'ensemble des modules de raccordement 5 dans les supports forme une matrice pour connecter les extrémités des premières fibres de réseau à des premières extrémités des fibres de liaison. Cette matrice a des lignes de modules horizontales parallèles à l'axe de rotation 3 et à la traverse 12sd, 12I, et des colonnes de modules formées par les supports 2, tantôt verticaux, tantôt obliques sensiblement à 45°.

Comme cela est visible à la figure 2, aucun trou 23 n'est pratiqué dans la partie inférieure de chaque support 2. Cette disposition évite de contraindre une fibre optique de liaison dont la fiche de connexion FC1 doit être enfichée dans un trou 23 situé sur une ligne matricielle inférieure dans le répartiteur R1, à se courber vers l'espace intermédiaire ES entre les répartiteurs R1 et R2 suivant un arc dont le rayon est inférieur au rayon de courbure minimum acceptable pour des fibres optiques.

Les fibres optiques sortant de chaque câble de réseau CF1 cheminent suivant une courbe respectueuse du rayon de courbure minimum des fibres depuis un point de rattachement situé en partie inférieure du support le plus près possible de l'axe de rotation 3. Le point de rattachement ainsi situé sous le support constitue alors un point quasi fixe lors de rotations des supports, évitant ainsi d'avoir à disposer de "mou" de fibres pour réaliser les déplacements des supports.

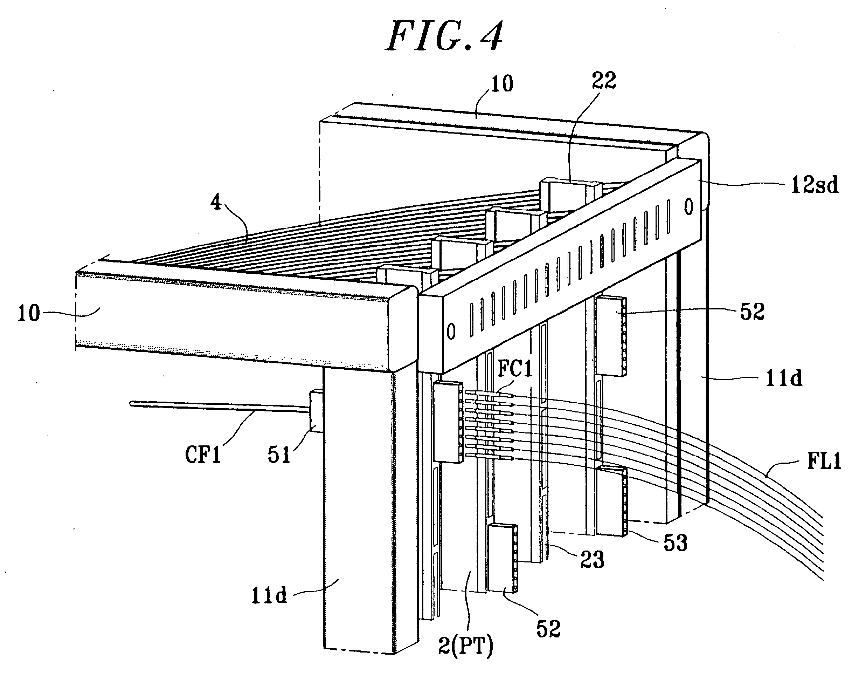

En pratique, les extrémités des premières fibres optiques dans les câbles de réseau CF1 sont enfichées une fois pour toutes dans les modules de raccordement respectifs 5, bien que l'extraction d'une extrémité de première fibre optique soit toujours possible pour faciliter par exemple une opération de maintenance du module de raccordement correspondant. Seules les fiches de connexion FC1 aux extrémités des fibres optiques de liaison FL peuvent être extraites et repositionnées dans des modules de raccordement de manière à modifier les liaisons entre les premières fibres et les deuxièmes fibres qui desservent des équipements d'usager. Lorsqu'aucune de ces opérations n'est souhaitée, tous les supports 2 de modules de raccordement sont disposés en position de repos PR, leurs extrémités supérieures 22 étant en butée contre la traverse intermédiaire 12I. Après l'avoir tiré vers la droite autour de l'axe de rotation 3, en référence aux figures 2 et 4, un support 2 est positionné sur le côté droit du répartiteur R1, en position de travail PT, pour procéder à la déconnexion et/ou la connexion d'au moins une fiche de connexion de fibre de liaison FC1. Lors de la rotation du support 2, de la position de repos PR vers la position de travail PT ou de la position de travail vers la position de repos, le support 2 est guidé par le rail 4 dont les extrémités 41 et 42 sont solidaires des deux traverses de butée 12sd et 12I. Le rail évite également tout flambement du support profilé qu'entraînerait le poids des modules de raccordement.

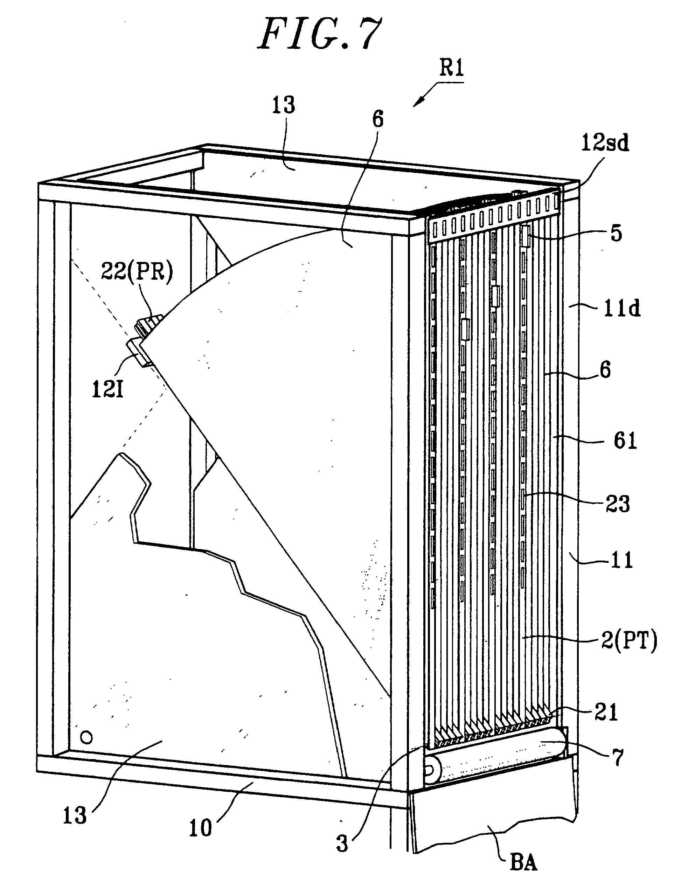

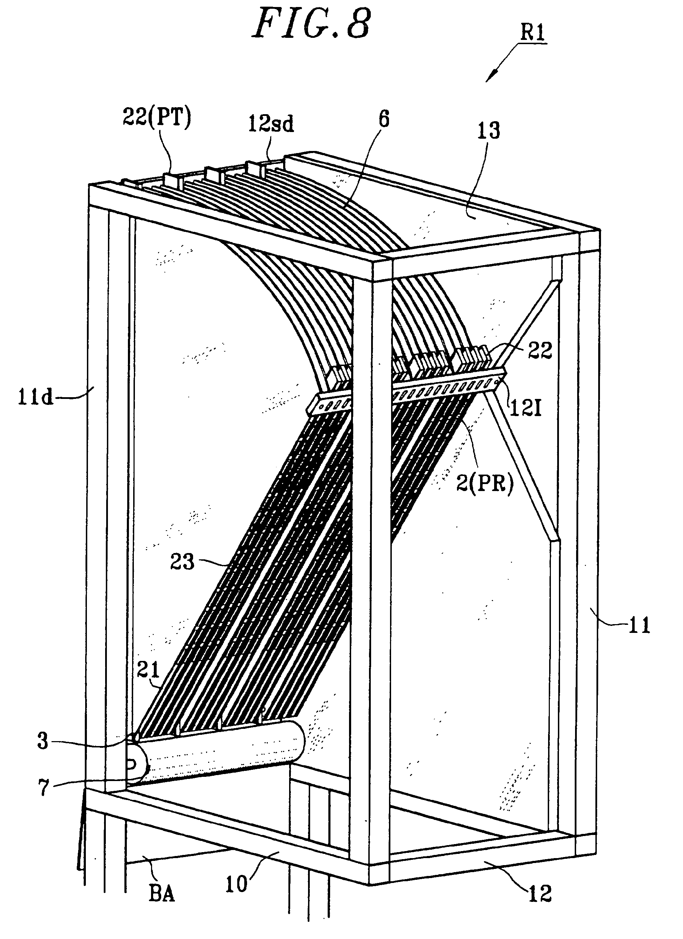

Selon une deuxième réalisation de l'invention montrée aux figures 7 et 8, le répartiteur élémentaire R1 comprend des cloisons 6 de manière à séparer les secteurs de rotation 61 à balayer par les supports de modules de raccordement 2. Les cloisons 6 forment un peigne dont les dents s'étendent à partir de l'axe de rotation 3 suivant un secteur circulaire sensiblement de 45° entre les deux traverses de butée 12sd et 12I. Le sommet inférieur de chaque cloison est traversé par l'axe de rotation 3. Les deux sommets supérieurs de chaque cloison sont, selon l'exemple de réalisation illustré, fixés perpendiculairement aux traverses de butée 12sd et 12I. Selon une autre réalisation, les chants gauches des cloisons sont fixés respectivement le long de chants prédéterminés, droits ou gauches, des supports 3, les cloisons tournant avec les supports autour de l'axe de rotation 3. Deux cloisons voisines évitent tout emmêlement des fibres de liaison dont les fiches de connexion FC1 sont enfichées dans des modules 5 supportés par le support associé 2 qui bascule entre lesdites deux cloisons, avec des fibres de liaison aboutissant dans les autres supports 3, mais également tout emmêlement des extrémités des premières fibres correspondantes CF1.

Un rouleau transversal 7 est monté fou ou fixe autour d'un axe fixé en partie inférieure des deux montants 11d du côté droit du répartiteur, entre l'axe de rotation 3 et la traverse inférieure droite 12id du répartiteur R1. La surface du rouleau 7 est quelque peu saillante du côté droit du répartiteur élémentaire R1 de manière à soutenir les fibres de liaison FL et ainsi à reprendre l'effort dû au poids des fibres de liaison sortant des modules de raccordement 5 inclus dans le répartiteur R1. En outre, le rouleau 7 garantit le rayon de courbure minimum des fibres de liaison FL à la sortie des modules de raccordement, notamment de celles situées en partie inférieure des supports 2 qui subissent le poids des autres fibres de liaison. Le rouleau assure également le guidage des fibres de liaison.

En revenant à la figure 1, le troisième bloc parallélépipédique B3 situé en partie inférieure du répartiteur de grande capacité RGC contient une bande souple BA dont les extrémités sont fixées aux traverses inférieures 12id des répartiteurs R1 et R2 afin que la bande soit suspendue entre les répartiteurs R1 et R2 jusqu'au voisinage du sol. La bande souple BA qui peut être un ruban en caoutchouc, un filet, ou une bande de tissu, forme un "hamac" pour accueillir les fibres de liaison FL qui épousent sa forme. La bande suspendue BA supporte également les longueurs de fibres de liaison nécessaires aux opérations de brassage, ainsi que toutes fibres de liaison qui seraient en attente de connexion.

A titre d'exemple, un répartiteur élémentaire R1 (ou R2) pour raccorder 10.080 premières fibres optiques dans des câbles de réseau CF1 (ou deuxièmes fibres dans des câbles d'équipements d'usager CF2) à des fibres de liaison FL comprend environ 84 supports 2 équipés de 15 modules de raccordement pour raccorder 8 fibres de liaison, soit au maximum 120 points de connexion par support. Le répartiteur élémentaire a une hauteur de 90 cm, une longueur de face de 65 cm et une largeur de côté de 1,25 m. Le répartiteur RGC a une longueur de 2,5 mètres et une hauteur de 1,90 mètre. L'espace intermédiaire ES entre les répartiteurs R1 et R2 au-dessus de la bande BA porteuse des fibres de liaison FL contenues dans le bloc B3 de hauteur 1 m a alors une longueur d'environ 1,2 m.

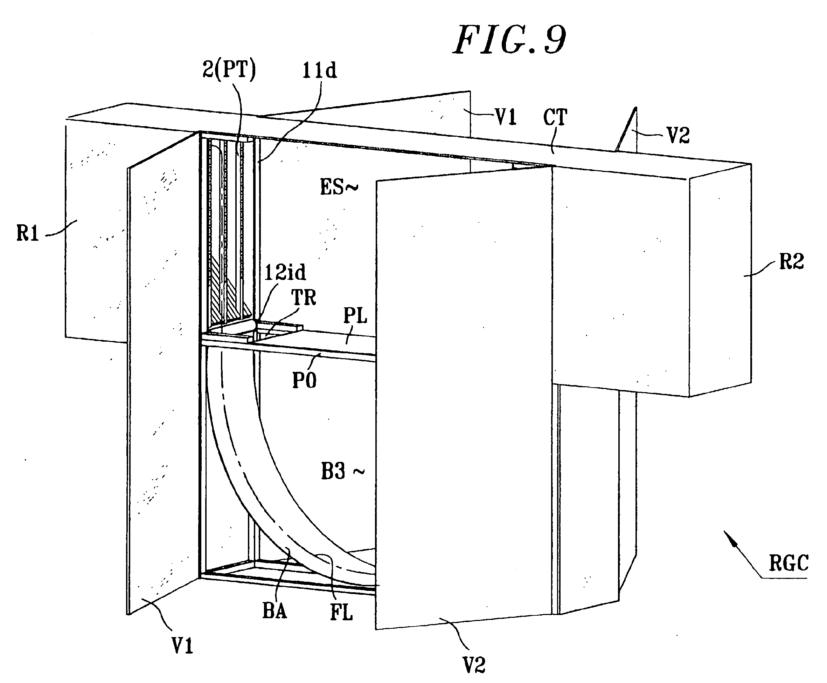

Comme montré à la figure 9, le répartiteur RGC est protégé par un carénage de tôles métalliques démontables CT présentant sur chacune des faces avant et arrière, devant la partie centrale composée de l'espace intermédiaire ES et du bloc B3 où sont développées les fibres optiques de liaison FL, une porte à deux vantaux V1 et V2. Ce carénage sécurise le répartiteur, protège les fibres optiques, et diminue les risques de pollution ambiante des connexions des extrémités de fibres optiques dans les modules de raccordement 5.

Le côté supérieur du bloc B3 est recouvert d'un plateau amovible PL dont les extrémités forment des trous rectangulaires TR avec les traverses inférieures 12id des répartiteurs R1 et R2 de manière à laisser passer les fibres de liaison FL. Le plateau PL sert de table pour procéder à diverses opérations sur les extrémités des fibres optiques, et protège également les fibres optiques de liaison FL. Le plateau PL est articulé le long et au-dessus des deux poutrelles horizontales supérieures PO délimitant l'espace ES par rapport au bloc B3.

Une opération de "brassage" de fibres optiques dans le répartiteur de grande capacité RGC selon l'invention est effectuée de la manière suivante.

Préalablement, pour repérer un point de connexion entre deux fibres optiques dans la matrice de modules de raccordement du premier répartiteur R1, ou du deuxième répartiteur R2, trois numéros sont prévus : un numéro de support de modules de raccordement 2, un numéro de module de raccordement 5 inscrit à proximité du trou 23 recevant celui-ci dans le support 2, et un numéro de la première fibre dans un câble CL1 ou de la deuxième fibre dans un câble CL2 inscrit à proximité du trou correspondant 53 dans le module de raccordement 5 recevant l'extrémité de la première ou deuxième fibre.

A titre d'exemple, en référence à la figure 1, le "brassage" est supposé correspondre au remplacement de la liaison d'une première fibre donnée de câble CF1 avec un équipement d'usager A par une liaison de la première fibre donnée CF1 avec un équipement d'usager B, ce qui revient à "brasser" la fibre de liaison FLA desservant initialement l'équipement A avec l'équipement B, ou avec une fibre de liaison desservant l'équipement B.

Dans le deuxième répartiteur R2, l'extrémité de la fibre de liaison FLA est repérée grâce au triplé de numéros précités. Le support 2 contenant le module de raccordement 3 où aboutit la fibre FLA ainsi repérée est basculé de la position de repos inclinée PR vers la position de travail verticale PT, en butée contre la traverse supérieure 12sd. La fiche de connexion FC2 de la fibre de liaison FLA est retirée du module de raccordement repéré 3 et lâchée au-dessus de l'extrémité supérieure de la bande porteuse BA de fibres de liaison et tombe sur celle-ci. Le support 2 contenant le module de raccordement repéré 3 d'où a été retirée la fiche de connexion de fibre de liaison FC2 est basculé de la position de travail vers la position de repos dans le deuxième répartiteur R2.

Puis la première fibre donnée est repérée dans la matrice de modules de raccordement dans le premier répartiteur R1. Le support 2 correspondant à la première fibre donnée est basculé vers la droite de la position de repos inclinée PR à la position de travail verticale PT. La fibre de liaison FLA raccordée à la première fibre donnée de réseau est extraite de l'ensemble des fibres de liaison, sensiblement depuis le module de raccordement 5 correspondant ainsi repéré, sans retrait de la première fiche de connexion FC1 de la fibre de liaison FLA du module précité, jusqu'à atteindre la fiche de connexion FC2 de la fibre de liaison FLA retirée précédemment du deuxième répartiteur. Sans lâcher la fiche de connexion FC2 de la fibre de liaison FLA en cours de brassage, côté deuxième répartiteur R2, le support 2 dans le premier répartiteur R1 contenant le module de raccordement relatif à la première fibre donnée est basculé de la position de travail à la position de repos.

Dans la matrice de modules de raccordement du deuxième répartiteur R2, après avoir repéré l'extrémité de la deuxième fibre optique de câble CF2 raccordée à l'équipement d'usager B, le support 2 contenant le module de raccordement 5 à l'extrémité de cette deuxième fibre est basculé de la position de repos vers la position de travail dans le répartiteur R2. La fiche de connexion FC2 de la fibre de liaison FLA en cours de brassage encore maintenue est acheminée par dessus le flot des autres fibres de liaison pénétrant dans le deuxième répartiteur R2 pour éviter tout emmêlement, en direction du trou d'enclipsage 53 correspondant dans le module de raccordement 5 du support 2 à la position de travail. Après avoir enfiché la fiche de connexion FC2 de la fibre de liaison FLA dans le module de raccordement, le support est remis à la position de repos.

D'une manière similaire, les diverses étapes opératoires ci-dessus peuvent être répétées du côté réseau, c'est-à-dire par rapport à une première extrémité FL1 d'une fibre de liaison située dans le premier répartiteur R1 de manière à la déconnecter d'une première fibre donnée de câble CF1 et à la connecter à une autre première fibre de câble CF1.

Par une succession d'étapes similaires, le brassage peut également s'effectuer par extraction totale de la fibre de liaison à brasser. Les extrémités de la fibre de liaison sont alors déconnectées dans les premier et deuxième répartiteurs matriciels R1 et R2. La fibre de liaison est entièrement retirée du répartiteur RGC, par extraction depuis la dernière extrémité déconnectée. Les extrémités de la fibre de liaison sont ensuite reconnectées en prenant soin de positionner la fibre de liaison par dessus le flot des fibres de liaison portées par la bande suspendue BA, pour éviter tout emmêlement.

L'extraction totale d'une fibre de liaison est également pratiquée pour supprimer une continuité optique entre une première fibre de réseau et une deuxième fibre.

La maintenance dans le répartiteur RGC selon l'invention est aisée. Une fibre de liaison FL présentant des anomalies peut être extraite totalement pour être remplacée par une autre fibre de liaison. Une extrémité FL1, FL2 d'une fibre de liaison peut être connectée à l'extrémité d'une première fibre de réseau ou d'une deuxième fibre d'équipement, comme cela a été décrit précédemment, en accédant aisément au plateau de travail PL au-dessus de la bande porteuse de fibres de liaison et en accédant latéralement dessous ce plateau aux fibres de liaison, après avoir ouvert au moins l'une des portes V1-V2, et grâce aussi au basculement des supports 2 montés à rotation autour des axes 3.

La capacité du répartiteur RGC selon l'invention est augmentée aisément grâce à son double aspect modulaire, par adjonction de modules de raccordement 5 dans les supports 2 déjà installés et par adjonction de supports supplémentaires dans les répartiteurs R1 et R2.

D'autres dispositions relatives des premier et deuxième répartiteurs peuvent être envisagées par l'homme du métier dans le cadre de la présente invention, en fonction du volume et des disponibilités offertes par la pièce recevant le répartiteur de grande capacité. Par exemple, les premier et deuxième répartiteurs peuvent être disposés côte à côte, d'une manière disjointe ou séparée ; ou bien l'un au-dessus de l'autre en positions symétriques par rapport à un plan horizontal ; ou bien encore disposés perpendiculairement l'un par rapport à l'autre sur un plan horizontal.

Dans certaines de ces dispositions, les fibres de liaison n'ont pas toutes la même longueur. Le brassage s'opère alors par extraction totale de la fibre de liaison, puis par pose d'une autre fibre de liaison dont la longueur est choisie en fonction des positions des modules de raccordement dans lesquels les fiches de connexion de la fibre de liaison doivent être enfichées.

Les positions de travail des supports de modules de raccordement 2 ne sont pas obligatoirement dans des plans verticaux, ou dans des plans parallèles.

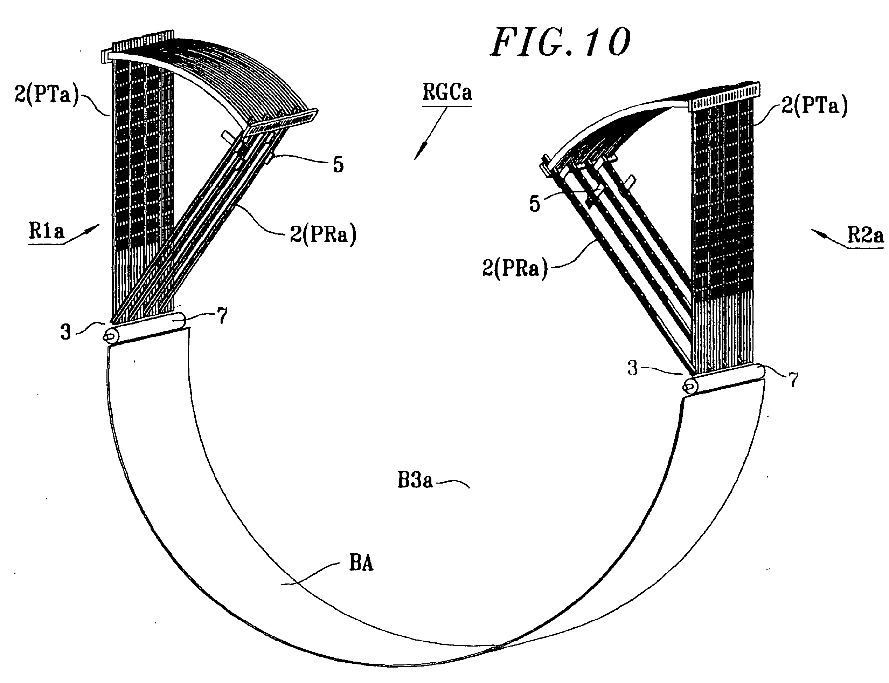

Selon une troisième réalisation de l'invention, comme montré à la figure 10, les positions de repos inclinées PRa des supports 2 peuvent être situées entre les plans qui sont verticaux selon l'exemple de réalisation illustré et qui sont définis par les positions de travail PTa et non à l'extérieur de ceux-ci. Dans cette troisième réalisation, les répartiteurs R1a et R2a sont situés au-dessus du bloc parallélépipédique B3a contenant la bande suspendue BA pour fibres de liaison FL, de sorte que le répartiteur à grande capacité RGCa est plus compact que le répartiteur RGC.

Comme déjà dit, l'invention concerne également un répartiteur ne comprenant qu'un étage matriciel de modules de raccordement constitué par le répartiteur élémentaire R1 ou R2.

## Revendications

1. Répartiteur de fibres optiques (R1) comprenant des modules de raccordement (5) répartis suivant une matrice pour connecter des extrémités de premières fibres optiques (CF1) à des extrémités (FL2) de deuxièmes fibres optiques (FL), et des supports (2) supportant respectivement des rangées de modules de raccordement (5), s'étendant parallèlement à deux côtés (11) de la matrice et ayant des premières extrémités (21) montées à rotation autour d'un axe de rotation (3) parallèle aux deux autres côtés (12) de la matrice, **caractérisé en ce qu'**il comprend des guides (4) parallèles en arcs de cercle centrés sur l'axe de rotation (3) pour guider des deuxièmes extrémités (22) des supports (2) sous forme de barrettes entre deux butées (12sd, 12I).

2. Répartiteur conforme à la revendication 1, dans lequel l'une (12sd) des butées et l'axe de rotation (3) sont situés sensiblement dans un côté du répartiteur.

3. Répartiteur conforme à la revendication 1 ou 2, comprenant des cloisons (6) entre des secteurs circulaires (61) balayés par les supports (2) lorsqu'ils tournent autour de l'axe de rotation (3).

4. Répartiteur conforme à l'une quelconque des revendications 1 à 3, comprenant un rouleau (7) s'étendant parallèlement à l'axe de rotation (3) et à proximité de celui-ci.

5. Répartiteur conforme à l'une quelconque des revendications 1 à 4, dans lequel chaque support (2) comprend des logements (23) alignés perpendiculairement à l'axe de rotation et conformés pour y fixer de manière amovible des modules de raccordement (5) respectivement.

6. Répartiteur de fibres optiques (RGC) comprenant un premier répartiteur (R1) incluant des modules de raccordement (5) répartis suivant une matrice pour connecter des extrémités de premières fibres optiques (CF1) à des premières extrémités (FL1) de fibres optiques de liaison (FL), et un deuxième répartiteur (R2) incluant des modules de raccordement (5) répartis suivant une matrice pour connecter des extrémités de deuxièmes fibres optiques (CF2) à des deuxièmes extrémités (FL2) des fibres optiques de liaison (FL), chacun des premier et deuxième répartiteurs (R1, R2) comprenant des supports de modules de raccordement (2) supportant respectivement des rangées de modules de raccordement s'étendant parallèlement à deux côtés (11) de la matrice respective et ayant des premières extrémités (21) montées à rotation autour d'un axe de rotation (3) parallèle aux deux autres côtés de la matrice respective, **caractérisé en ce que** chacun des premier et deuxième répartiteurs comprend des guides (4) parallèles en arcs de cercle centrés sur l'axe de rotation (3) pour guider des deuxièmes extrémités (22) des supports (2) sous forme de barrettes entre deux butées (12sd, 12I).

7. Répartiteur conforme à la revendication 6, comprenant une bande (BA) suspendue entre les premier et deuxième répartiteurs (R1, R2) et située sensiblement au-dessous des axes de rotation (3) pour porter les fibres de liaison (FL).

8. Répartiteur conforme à la revendication 7, comprenant un plateau de travail (PL), de préférence amovible ou articulé le long de l'un de ses côtés, s'étendant au-dessus de la bande (BA) porteuse des fibres de liaison (FL).

9. Répartiteur conforme à l'une quelconque des revendications 6 à 8, **caractérisé par** une structure de poutrelles (10), montants (11) et traverses (12), délimitant sensiblement deux blocs parallélépipédiques contenant les premier et deuxième répartiteurs (R1, R2) respectivement, et un troisième bloc parallélépipédique central (B3) reposant sur le sol dans lequel les fibres de liaison (FL) sont étendues et situé entre lesdits deux blocs parallélépipédiques.

10. Répartiteur conforme à l'une quelconque des revendications 6 à 9, **caractérisé en ce qu'**il est enfermé dans un carénage (CT) ayant au moins une porte (V1-V2) donnant accès directement sur un espace intermédiaire (ES, B3) situé entre les premier et deuxième répartiteurs (R1, R2) et contenant les fibres optiques de liaison (FL).

11. Répartiteur conforme à l'une quelconque des revendications 6 à 10, **caractérisé en ce que** chacun des premier et deuxième répartiteurs (R1, R2) comprend une butée (12sd) qui délimite une extrémité de course des supports (2) et qui est sensiblement coplanaire à l'axe de rotation (3) dans un côté du répartiteur.

## Claims

1. A distribution frame for optical fibers (R1) comprising connection modules (5) distributed in a matrix to connect ends of first optical fibers (CF1) to ends (FL2) of second optical fibers (FL), and supports (2) for supporting respective rows of connection modules (5), extending parallel to two sides (11) of the matrix and having first ends (21) rotatably mounted about a rotation shaft (3) parallel to the other two sides (12) of the matrix, **characterized in that** it comprises parallel circular arcuate guides (4) centered on the rotation shaft (3) for guiding second ends (22) of the supports (2) in the form of bars between two abutments (12sd, 12I).

2. A distribution frame according to claim 1, wherein one (12sd) of the abutments and the rotation shaft (3) are substantially located in one side of the distribution frame.

3. A distribution frame according to claim 1 or 2, comprising partitions (6) between circular sectors (61) swept by the supports (2) when they turn about the rotation shaft (3).

4. A distribution frame according to any one of claims 1 to 3, comprising a roller (7) parallel to and near the rotation shaft (3).

5. A distribution frame according to any one of claims 1 to 4, wherein each support (2) includes housings (23) aligned perpendicularly to the rotation shaft and shaped for removably fixing connection modules (5) therein respectively.

6. A distribution frame for optical fibers (RGC) comprising a first distribution frame (R1) including connection modules (5) distributed in a matrix to connect ends of first optical fibers (CF1) to first ends (FL1) of connecting optical fibers (FL), and a second distribution frame (R2) including connection modules (5) distributed in a matrix to connect ends of second optical fibers (CF2) to second ends (FL2) of the connecting optical fibers (FL), each of the first and second distribution frames (R1, R2) comprising connection module supports (2) for supporting respective rows of connection modules parallel to two sides (11) of the respective matrix and having first ends (21) rotatably mounted about a rotation shaft (3) parallel to the other two sides of the respective matrix, **characterized in that** each of first and second distribution frames comprises parallel circular arcuate guides (4) centered on the rotation shaft (3) for guiding second ends (22) of the supports (2) in the form of bars between two abutments (12sd, 12I).

7. A distribution frame according to claim 6, comprising a strip (BA) suspended between the first and second distribution frames (R1, R2) and disposed substantially below the rotation shafts (3) to support the connecting fibers (FL).

8. A distribution frame according to claim 7, comprising a working plate (PL), preferably removable or hinged along one side and extending over the strip (BA) carrying the connecting fibers (FL).

9. A distribution frame according to any one of claims 6 to 8, **characterized by** a structure made up of beams (10), uprights (11) and crossbeams (12), substantially delimiting two parallelepiped-shape blocks containing the first and second distribution frames (R1, R2) respectively, and a central third parallelepiped-shape block (B3) resting on the floor, in which the connecting optical fibers (FL) extend and which is located between said two parallelepiped-shaped blocks.

10. A distribution frame according to any one of claims 6 to 9, **characterized in that** it is enclosed in a casing (CT) having at least one door (V1-V2) providing direct access to an intermediate space (ES, B3) located between the first and second distribution frames (R1, R2) and containing the connecting optical fibers (FL).

11. A distribution frame according to any one of claims 6 to 10, **characterized in that** each of the first and second distribution frames (R1, R2) comprises an abutment (12sd) which delimits an end of travel of the supports (2) and which is substantially coplanar with the rotation shaft (3) in one side of the distribution frame.

## Patentansprüche

1. Verteiler für optische Fasern (R1) mit Verbindungsmodulen (5), die in einer Matrix zur Verbindung von Enden erster optischer Fasern (CF1) mit Enden zweiter optischer Fasern (FL) angeordnet sind, und mit Trägern (2), die jeweils Reihen von Verbindungsmodulen (5) tragen, die sich parallel zu zwei Seiten (11) der Matrix erstrecken, und die erste enden (21) aufweisen, die drehbar um eine Rotationsachse (3) parallel zu zwei anderen Seiten (12) der Matrix angeordnet sind, **dadurch gekennzeichnet, dass** er Führungen (4) aufweist, die parallel zu um die Rotationsachse (3) zentrierte Kreisbogen verlaufen, um zweite Enden (22) der Träger (2) in Form von Verbindungsschienen zwischen zwei Anschlägen (12sd, 12I) zu führen.

2. Verteiler nach Anspruch 1, bei dem der eine (12sd) der Anschläge und die Rotationsachse (3) genau auf einer der Seiten des Verteilers angeordnet sind.

3. Verteiler nach Anspruch 1 oder 2, der Trennwände (6) zwischen Kreisausschnitten (61) aufweist, die von den Trägern (2) überstrichen werden, wenn sie um die Rotationsachse (3) verschwenken.

4. Verteiler nach einem der Ansprüche 1 bis 3, der eine Walze (7) aufweist, die sich parallel und benachbart zur Rotationsachse (3) erstreckt.

5. Verteiler nach einem der Ansprüche 1 bis 4, bei dem jeder Träger (2) Aufnahmen (23) aufweist, die senkrecht zur Rotationsachse ausgerichtet und so geformt sind, dass darin Verbindungsmodule (5) lösbar befestigt werden können.

6. Verteiler für optische Fasern (RGC) mit einem ersten Verteiler (R1), der in einer Matrix angeordnete Verbindungsmodule (5) zur Verbindung von Enden erster optischer Fasern (CF1) mit ersten Enden (FL1) von optischen Verbindungsfasern (FL) aufweist, und mit einem zweiten Verteiler (R2), der in einer Matrix angeordnete Verbindungsmodule (5) zur Verbindung von Enden zweiter optischer Fasern (CF2) mit zweiten Enden (FL 2) der optischen Verbindungsfasern (FL) aufweist, wobei jeder der ersten und zweiten Verteiler (R1, R2) Verbindungsmodul-Träger (2) aufweist, die jeweils Reihen von Verbindungsmodule tragen, die sich parallel zu zwei Seiten (11) der Matrix erstrecken, und die erste Enden (21) aufweisen, die um eine parallel zu zweiten Seiten der Matrix ausgerichtete Rotationsachse (3) drehbar angeordnet sind, **dadurch gekennzeichnet, dass** jeder der ersten und zweiten Verteiler Führungen (4) aufweist, die parallel zu um die Rotationsachse (3) zentrierte Kreisbogen verlaufen, um zweite Enden (22) der Träger (2) in Form von Verbindungsschienen zwischen zwei Anschlägen (12sd, 12I) zu führen.

7. Verteiler nach Anspruch 6, mit einem Band (BA), das zwischen dem ersten und dem zweiten Verteiler (R1, R2) hängt und genau unter den Rotationsachsen (3) angeordnet ist, um die Verbindungsfasern (FL) zu tragen.

8. Verteiler nach Anspruch 7, mit einer vorzugsweise abnehmbaren oder um eine ihrer Seiten schwenkbaren Arbeitsplattform (GL), die sich unterhalb des Bandes (BA), das die Verbindungsfasern trägt, erstreckt.

9. Verteiler nach einem der Ansprüche 6 bis 8, **gekennzeichnet durch** eine Tragestruktur (10), Ständern (11) und Querträgern (12), die genau zwei Quader begrenzen, die jeweils die ersten und beiden Verteiler (R1, R2) enthalten, und einen dritten zentralen Quader (B3), der auf dem Boden steht und in dem die Verbindungsfasern (FL) enthalten sind und der zwischen den beiden besagten Quadern angeordnet ist.

10. Verteiler nach einem der Ansprüche 6 bis 9, **dadurch gekennzeichnet, dass** er in einer Verkleidung (CT) eingeschlossen ist mit mindestens einer Tür (V1-V2), die einen direkten Zugang zu einem Zwischenraum (ES, B3) zwischen dem ersten und zweiten Verteiler (R1, R2), der die optischen Verbindungsfasern (FL) enthält, schafft.

11. Verteiler nach einem der Ansprüche 6 bis 10, **dadurch gekennzeichnet, dass** jeder der ersten und zweiten Verteiler (R1, R2) einen Anschlag (12sd) aufweist, der ein Ende des Wegs der Träger (2) begrenzt und der exakt koplanar zur Rotationsachse (3) auf einer Seite des Verteilers ist.
